# EUROPEAN PATENT SPECIFICATION

(11) **EP 2 571 224 B1**
(45) Date of publication and mention of the grant of the patent: **31.08.2016**
(21) Application number: 11780066.4
(22) Date of filing: 27.01.2011
(51) Int. Cl.: H04L 29/06, H04W 4/00, H04L 29/08

(54) **METHOD FOR PROCESSING MESSAGES ON M2M PLATFORM AND M2M PLATFORM SYSTEM**
VERFAHREN ZUR VERARBEITUNG VON MELDUNGEN AUF EINER M2M-PLATTFORM UND M2M-PLATTFORMSYSTEM
PROCÉDÉ DE TRAITEMENT DE MESSAGES SUR PLATEFORME M2M ET SYSTÈME DE PLATEFORME M2M

(30) Priority: 10.05.2010 CN 201010172747
(43) Date of publication of application: 20.03.2013
(73) Proprietor: ZTE Corporation, Shenzhen, Guangdong 518057 (CN)
(72) Inventor: YANG, Yu, Guangdong 518057 (CN); LI, Shun, Guangdong 518057 (CN)
(74) Representative: Zimmermann, Tankred Klaus
(86) International application number: PCT/CN2011/070720
(87) International publication number: WO 2011/140844

(56) References cited:
- EP-A1- 2 175 603
- WO-A2-2005/026915
- CN-A- 1 430 389
- CN-A- 101 083 636
- US-B1- 6 263 366

## Description

### Field of the Invention

The disclosure relates to communication field, specifically to a method for processing a message of a Machine-to-Machine/Man (M2M) platform and an M2M platform system.

### Background of the Invention

M2M is a networked application and service using the intelligent interaction of machine terminals as the core. It provides customers with comprehensive information-based solutions by embedding wireless communication modules in the machine and using the wireless communication or the like as the access means, thereby meeting the information-based demands of customers for monitoring, commands scheduling, data acquisition, measurement and the like. The Wireless M2M Protocol (WMMP) is an application layer protocol designed by China Mobile for the data communications between M2M terminals and a M2M platform, M2M terminals, and the M2M platform and application platform in M2M service.

With the focus on M2M in the industry and the application of large-scale M2M deployment launched by the mainstream operators, many well-known manufacturers are working on researching and developing the application terminal supporting various protocols to meet the operation requirement.

At present, the M2M platform implemented in the industry is researched and developed according to protocol and commercial mode. For example, a platform researched and developed by the China Mobile is capable of supporting the WMMP protocol and meeting the operation service demand of the WMMP. However, different operator provides different interface protocol specification, resulting in independent M2M interface protocol specifications of respective operators to support their protocols. Meanwhile, the terminal manufacturers also need to research and develop the application terminals supporting interface protocols of various operators to interact with the corresponding M2M platforms, however, the current M2M platforms only can perform the independent processing and message exchange against one protocol terminal.

In the actual use, the interface protocol supported by a terminal may not match with the interface protocol of an M2M platform, then, if the terminal sends a message to the M2M platform, the interface of the M2M platform drops the message of the terminal directly, causing limited information interaction between them and influencing the user on the normal use of the M2M platform. US 6,263,366 B1 and WO 2005/026915 A2 provide respective technical solutions; however, the above mentioned problem still remains unsolved.

### Summary of the Invention

The invention is related to a method for processing messages of M2M platforms according to claim 1 and a M2M platform system according to claim 7. Further embodiments are disclosed in the dependent claims.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram of the networking of an M2M platform according to an embodiment of the present invention;
Fig. 2 is a flowchart of a method for processing a message of an M2M platform according to the first embodiment of the present invention;
Fig. 3 is a schematic diagram of the message format of WMMP according to the second embodiment of the present invention;
Fig. 4 is a method flowchart of a method for processing a message of an M2M platform according to the second embodiment of the present invention;
Fig. 5 is a method flowchart of an another method for processing a message of an M2M platform according to the second embodiment of the present invention;
Fig. 6 is a structure diagram showing the structure of an M2M platform system according to the third embodiment of the present invention; and
Fig. 7 is a structure diagram showing an adaptation device according to the third embodiment of the present invention.

### Detailed Description of the Embodiments

The preferred embodiments are described in conjunction with the drawings as follows. It shall be understood that the embodiments of the present application and the features of the embodiments can be combined with each other if there is no conflict.

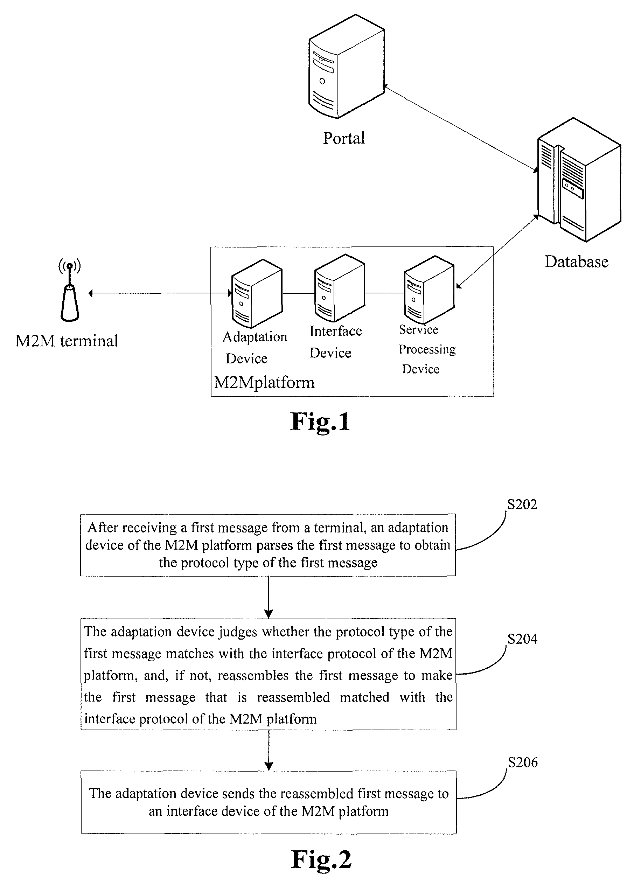

Fig. 1 is a schematic diagram of the networking of an M2M platform according to an embodiment of the present invention. As shown in Fig.1, the M2M platform comprises: an adaptation device, an interface device and a service processing device, wherein the adaptation device is set between a terminal and the interface device, and the interface device is connected with the adaptation device at one end and with the service processing device at the other end. The connection relationship between those devices complies present invention disclosure below are implemented based on the M2M platform.

### First Embodiment

Fig. 2 is a method flowchart of a method for processing a message of an M2M platform according to the first embodiment of the present invention. As shown in Fig.1, the method comprises the following steps.

Step S202: after receiving a first message from a terminal, an adaptation device of the M2M platform parses the first message to obtain the protocol type of the first message, wherein the first message is from the terminal and used for distinguishing the messages which is sent from the M2M platform to the terminal.

Step 204: the adaptation device judges whether the protocol type of the first message matches with the interface protocol of the M2M platform, and, if the protocol type of the first message does not match with the interface protocol of the M2M platform, reassembles the first message to make the first message that is reassembled match with the interface protocol of the M2M platform.

During the reassembly of the first message, a graphic configuration interface preset on the adaptation device can be used, and the interface configured with the configuration conversion relationship of non-standard terminal protocol and M2M platform standard protocol, and the reassembled message can access to the M2M platform for application.

Step 206: the adaptation device sends the first message that is reassembled to an interface device of the M2M platform.

The method above is to process messages from the terminal, and correspondingly, the messages to the terminal are handled according to the method below.

After receiving a second message from the interface device, the adaptation device parses out a terminal serial number from a second message; judges, according to the terminal serial number, whether a protocol type of the second message matches with a protocol type of the terminal, and, if the protocol type of the second message does not match with the protocol type of the terminal, the adaptation device reassembles the second message to make the second message that is reassembled match with the protocol type of the terminal; and sends the second message that is reassembled to the terminal.

In the related arts, the message of the terminal is sent to the interface device of the M2M platform directly, and there is no adaptation device in the M2M platform. Therefore, when the protocol type of the terminal does not match with the interface protocol of the M2M platform, the message is dropped directly. However, in this embodiment, an adaptation device is set in front of the interface device of the M2M platform, to reassemble the messages of the terminal which are not matching with the interface protocol of the M2M platform into messages in the format of matching with the interface protocol of the M2M platform, and the reassembled message are forwarded to the interface device for completing the subsequent processing of the message.

This embodiment adopts the adaptation device to reassemble the message between the non-standard terminal (that is, the one not supporting the M2M interface protocol) and M2M platform, that is, converting the format of the message. Thereby solving the problem of limited information interaction between the terminal and M2M platform and making the access of terminal to M2M platform more flexible and extensive. Therefore, the management and service application among the terminal, M2M platform and application are realized.

### Second Embodiment

The M2M platform of this embodiment is described by an example of the platform based on the WMMP protocol of the China Mobile, and the terminals which do not support the WMMP protocol are referred to as non-standard terminals. Before message processing, in this embodiment, the configuration is initialized first, that is, configuring an adaptation rule table, so that an adaptation device can reassemble the message according to the adaptation rule table when reassembling the message, and the specific configuration process is as follows.
1) The message format (message header and message body TLV) and protocol type (for example, the China Mobile, the China Telecom or others) of some non-standard terminal which need to be accessed are determined, and the specific meaning of each byte in the message, and the structures of the message header and message body are determined.
2) The administrator configures an adaptation rule table on the adaptation device according to the message format and the message type and other information of the non-standard terminal, that is, the corresponding field value of each protocol type needs to be configured in the adaptation rule table against the data in the protocol type table of the non-standard terminal, and as, when parsed, the protocol type of the message of the non-standard terminal belongs to the same byte with that of the command code of the WMMP message, it is required to check that the value of the protocol type cannot be identical to that of the command code (CommandId) of WMMP when the protocol type is configured on the adaptation device. The protocol type can be expanded according to the terminal demand, that is, addition, modification and deletion.
3) The administrator configures the mapping relationship between the command type code (CommandId) of each terminal type and the command code of standard WMMP on the adaptation device, and each non-standard protocol terminal needs to create to a data table of mapping relationship for command type code. That is, each command type mapping relationship table uses the protocol type as an index.

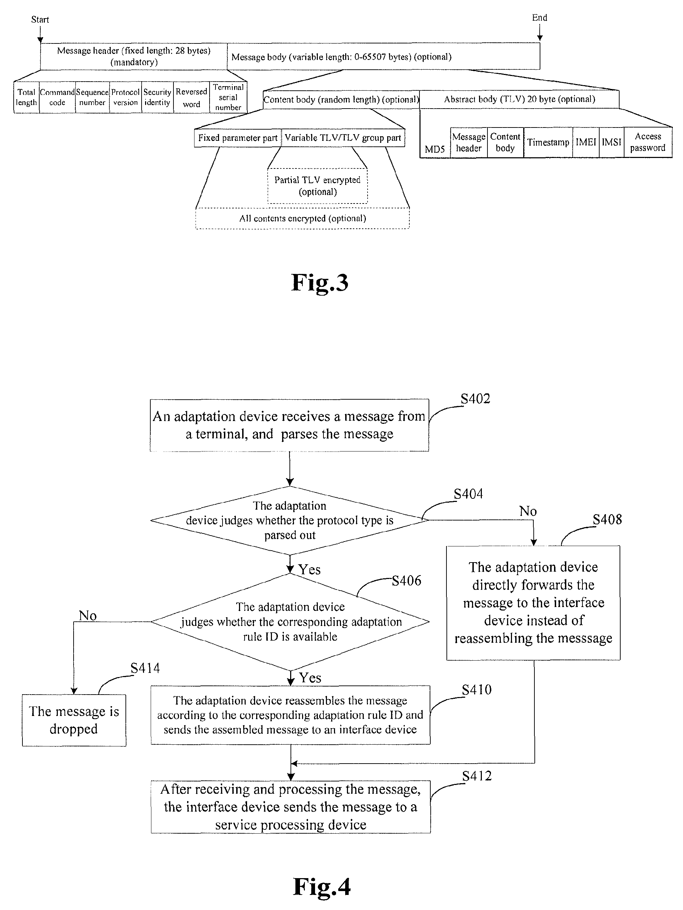

4) Fig. 3 is a schematic diagram of the message format of WMMP according to the second embodiment of the present invention. As shown in Fig.3, a message header length of a WMMP message is 28 bytes (mandatory field) and a message body length of the WMMP message is 0-65507 bytes (optional field), wherein the message header includes the following fields: a total length (Len), a command code (CommandId), a sequence number (SequenceNo), protocol version (Version), a security identity (Identify), a reserved word (Reserve) and a terminal serial number (TerminalNo), and the message body includes content body and abstract body in which the specific contents are identical to that in the related arts, thus will not be described further here.
   The protocol of the non-standard terminal is adapted into the structure type of the message illustrated in Fig. 3. The administrator creates an adaptation rule table for the non-standard terminal on the adaptation device, and each protocol type is corresponding to an adaptation rule identifier (ID). In this adaptation rule table, it is required to fill in the protocol (for example, the China Mobile, the China Telecom or others) used by the non-standard terminal, and the protocol type is selected from the configured protocol type table. The adaptation rule table includes the following properties: (1) a adaptation rule identifier (ID), (2) a protocol type (type), (3) a total message length (Len), (4) a command type code (CommandId), (5) a message sequence number (SequenceNo), (6) a message protocol version (Version), (7) a message security identity (Identify), (8) a reserved word (Reserve), (9) a terminal serial number (TerminalNo) and (10) a message body (Msg).
5) The specific adaptation rule of the terminal is edited according to the protocol type supported by the terminal. For example, for the protocol type of the China Mobile, because the platform is based on the WMMP protocol, the adaptation rule table only needs to select the protocol type of the China Mobile without configuring other field values in the adaptation rule table.

For the protocols which are not supported by the M2M platform (for example, the China Telecom or custom), the messages are reparsed and remapped when the adaptation rule table is configured as follows:
(1) Rule ID - automatically generated.
(2) Protocol type (type) - selected from the existing protocol type table.
(3) Total message length (Len) - the converted total message length.
(4) Command type code (CommandId) - m, n (corresponding to the mth and nth bytes of the message of the non-standard terminal, representing taking the message value of the mth and nth bytes of the message header).
(5) Message sequence number.
(6) Message protocol version.
(7) Message security identity.
(8) Reserved word.
(9) Terminal serial number.
(10) Message body.

The field values of (5) to (10) are filled in the same way as field (4), that is, the message values of the mth and nth bytes, and it should check that field values m and n do not intersect with each other on the portal during the configuration. For the unfilled field values, the default values are used according to the message structure of the WMMP protocol.

Fig. 4 is a method flowchart of a method for processing a message of an M2M platform according to the second embodiment of the present invention. As shown in Fig.4, the method takes the processing of a message which is from a terminal as an example to explain, the method comprises the following steps.

Step S402: an adaptation device receives a message from the terminal and parses the message.

Step S404: the adaptation device determines whether the protocol type is parsed out, if the protocol type is parsed out, executes Step S406, otherwise executes Step S408.

When the message is parsed, the protocol type thereof can be parsed out according to the 3rd and 4th bytes of the message; and if the protocol type is not parsed out, it indicates that the message is a WMMP message, needing no adaptation (that is, reassembly).

Step 406: the adaptation device judges whether the corresponding adaptation rule identifier (ID) is available, if it is available, executes Step S410, otherwise executes Step S414.

The adaptation device queries whether a corresponding adaptation rule identifier (ID) is available in the adaptation rule table according to the protocol type that is parsed.

Step S408: The adaptation device forwards the message to an interface device directly without reassembling the message, and executes Step S412.

When the value parsed out from the message of the terminal according to the protocol type field does not have the corresponding protocol type value in the protocol type table, the adaptation device processes the message according to the WMMP protocol of the platform by default without adaptively assembling it. Meanwhile, if the message is a registration message, the corresponding adaptation rule ID value of the terminal serial number is not recorded in the terminal information table (that is, it is prescribed that the ID value is null).

Step S410: the adaptation device reassembles the message according to a corresponding adaptation rule identifier (ID), and sends the message that is assembled to the interface device.

The corresponding adaptation rule ID of the protocol type parsed out can be queried in the adaptation table. The message header is reparsed according to the configured value of each field of the adaptation rule ID. For the CommandId value parsed out, the CommandId value of the standard WMMP corresponding to the non-standard protocol needs to be queried in the command type code mapping table, and after all the field values are parsed, the message is assembled into the message in the format of the WMMP protocol. The field values of different field lengths are padded and intercepted in the ways of padding 0 and intercepting byte from the high-order position; and the field values not configured takes the corresponding message structure values of WMMP by default.

Meanwhile, for the registration message from the terminal, it is required to generate the corresponding relationship of the terminal serial number (TerminalNo) and adaptation rule ID in the terminal information table of the database.

Step S412: After receiving and processing the message, the interface device forwards the message to a service processing device. The interface device undertakes the access functions of all terminals, and the service processing device is responsible for the service related processing.

Step S414: the message is dropped.

For the message with the protocol type parsed out, when the related adaptation rule ID is not queried in the adaptation rule table, the adaptation module directly drops the message instead of parsing and assembling the message.

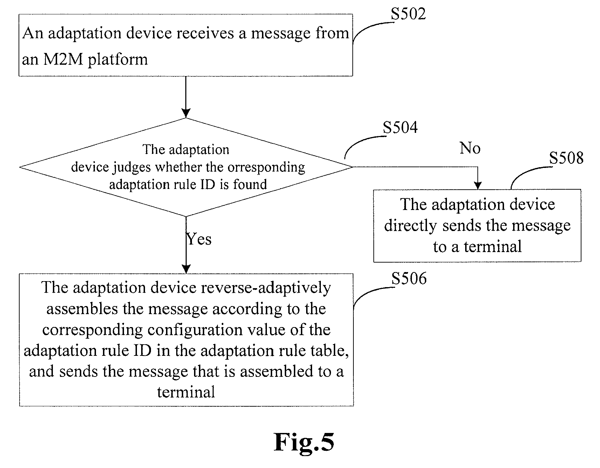

Fig. 5 is a method flowchart of another method for processing a message of an M2M platform according to the second embodiment of the present invention. As shown in Fig.5, the method takes the processing of the message which is from a terminal as an example to explain, the method comprises the following steps.

Step S502: an adaptation device receives a message from the M2M platform, that is, a message is received from an interface device.

Step 504: after receiving the message, the adaptation device judges whether the corresponding adaptation rule ID is found, if it is found, executes step S506, otherwise executes step S508.

The adaptation device searches a corresponding adaptation rule ID in the terminal information table according to a terminal serial number (that is, TerminalNo value) in the message.

Step 506: the adaptation device reverse-adaptively assembles the message according to the corresponding configuration value of the adaptation rule ID in the adaptation rule table and sends the message that is assembled to a terminal.

During the reverse assembly, CommandId needs to query the corresponding CommandId value of the non-standard terminal protocol in the command type code mapping table, and the value of different field length needs to be intercepted and padded with 0 from the high-order position for combination and is sent to the terminal.

Step 508: the adaptation device directly sends the message to the terminal.

When the terminal serial number does not have the corresponding adaptation rule ID value in the terminal information table, the adaptation device directly sends the message to the terminal instead of reassembling the message.

This embodiment adds an adaptation device at the front end of the original interface device by customizing a uniform adaptation rule table for the non-standard terminals, and the adaptation device reassembles the message by using the adaptation rule table to improve the assembly efficiency and realize the configuration conversion relationship of the non-standard terminal protocol and M2M platform standard protocol, thereby accessing more terminals not meeting the WMMP protocol, making the access of terminal to M2M platform more flexible and extensive and greatly expanding the functions of the M2M platform.

### Third Embodiment

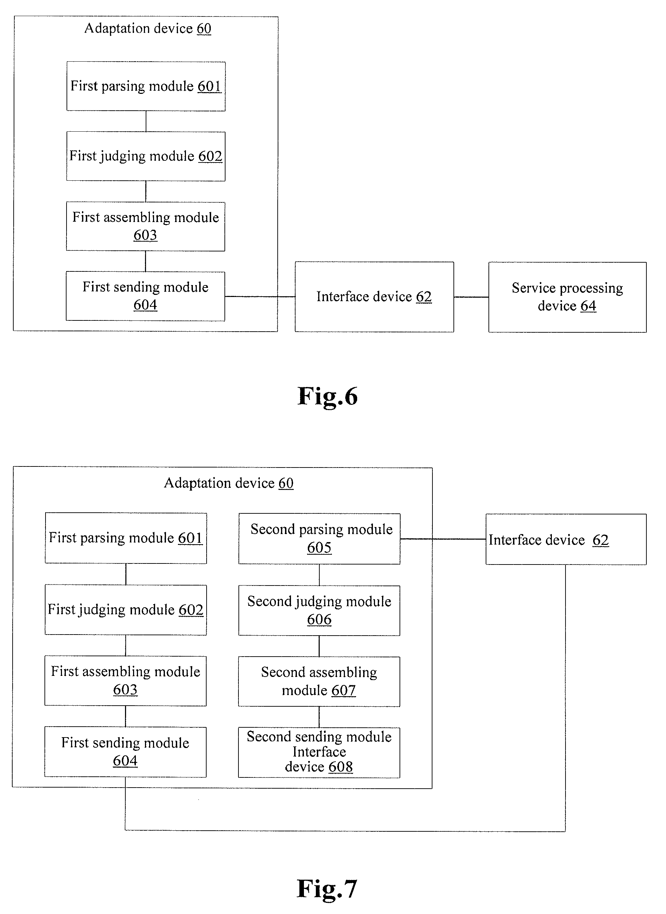

Fig. 6 is a structure diagram showing the structure of an M2M platform system according to the third embodiment of the present invention. As shown in Fig.6, the system comprises: an adaptation device **60,** an interface device **62** and a service processing device **64,** wherein the adaptation device **60** comprises the following modules.

A first parsing module **601,** configured, after receiving a first message from a terminal, to parse the first message to obtain a protocol type of the first message.

A first judging module **602,** configured to judge whether the protocol type of the first message matches with an interface protocol of the M2M platform.

A first assembling module **603,** configured, when the first judging module **602** judges that the protocol type of the first message does not match with the interface protocol of the M2M platform, to reassemble the first message to make the first message that is assembled match with the interface protocol of the M2M platform; and a first sending module **604,** configured to send the first message assembled by the first assembling module assembled to the interface device **62.**

Fig. 7 is a structure diagram showing an adaptation device according to the third embodiment of the present invention. As shown in the Fig.7, comprising the following modules:

A second parsing module **605,** configured, after receiving a second message from the interface device **62,** to parse out a terminal serial number from a second message.

A second judging module **606,** configured, according to the terminal serial number, to judge whether a protocol type of the second message matches with a protocol type of the terminal;
a second assembling module **607,** configured, when the second judging module 606 judges that the protocol type of the second message does not match with the protocol type of the terminal, to reassemble the second message to make the second message that is assembled match with the protocol type of the terminal; and
a second sending module **608,** configured to send the second message assembled by the second assembling module 607 to the terminal.

The adaptation device **60** is configured with an adaption rule table, the first assembling module **603** is configured to reassemble the first message according to the adaptation rule table, the second assembling module **607** is configured to reassemble the second message according to the adaptation rule table. The specific method for reassembling messages by the first assembling module **603** and the second assembling module **607** can be referred to that in the second embodiment, take the following for example.

The first assembling module **603** comprises: a searching unit, configured, according to the protocol type of the first message, to search for a first adaptation rule identifier (ID) in the adaptation rule table; and a first assembling unit, configured, according to a field configuration value corresponding to the first adaptation rule ID, to assemble the first message to obtain the first message that is assembled.

The second assembling module **607** comprises: a determining unit, configured, according to the terminal serial number, to determine a second adaptation rule identifier (ID); and a second assembling unit, configured, according to a field configuration value corresponding to the second adaptation rule ID which is found in the adaptation, to reverse-adaptively assemble the second message to obtain the second message that is assembled.

Preferably, when the first message is a registration message of the terminal, the adaptation device **60** further comprises: a relationship generating unit, configured to generate, in the terminal information table, a corresponding relationship between the terminal serial number and an adaptation rule identifier (ID); and the determining unit is configured, according to the terminal serial number, to search for the second adaptation rule identifier (ID) in the terminal information table.

This embodiment adopts the adaptation device **60** to reassemble the message between the non-standard terminal (that is, the one not supporting the M2M interface protocol) and M2M platform, thereby solving the problem of limited information interaction between the terminal and M2M platform and making the access of terminal to M2M platform more flexible and extensive. Therefore, the management and service application among the terminal, M2M platform and application are realized.

From the description above, it can be seen that the disclosure realizes the following technical effects: the disclosure can configure the adaptation rule of different protocol through a graphic interface, when the non-standard terminal uses the different protocol or the interface protocol does not match with the operator's interface specification, and uniformly convert the interface protocol into the standard protocol interface structure in the current M2M platform, thereby realizing the interaction among the terminal, M2M platform and application, so that the terminal access is more diversified, the M2M platform adaptation is more comprehensive, and the application range is more extensive.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

## Claims

1. A method for processing a message of a Machine-to-Machine/Man, M2M, platform, comprising the steps of:
an adaptation device of an M2M platform parsing (S202) a first message to obtain a protocol type of the first message after receiving the first message from a terminal;
the adaptation device judging (S204) whether the protocol type of the first message matches with an interface protocol of the M2M platform, and, if the protocol type of the first message does not match with the interface protocol of the M2M platform, reassembling the first message to make the first message that is reassembled match with the interface protocol of the M2M platform;
the adaptation device sending (S206) the first message that is reassembled to an interface device of the M2M platform;
the adaptation device parsing out a terminal serial number from a second message after receiving a second message from the interface device;
the adaptation device judging, according to the terminal serial number, whether a protocol type of the second message matches with a protocol type of the terminal, and, if the protocol type of the second message does not match with the protocol type of the terminal, reassembling the second message to make the second message that is reassembled match with the protocol type of the terminal; and
the adaptation device sending the second message that is reassembled to the terminal.

2. The method according to Claim 1, **characterized in that** the adaptation device is configured with an adaptation rule table; and
the step of reassembling the first message comprises: reassembling the first message according to the adaptation rule table.

3. The method according to Claim 2, **characterized in that** the step of reassembling the first message according to the adaptation rule table comprises: searching for a first adaptation rule identifier, ID, in the adaptation rule table according to the protocol type of the first message, and adaptively assembling the first message according to a field configuration value corresponding to the first adaptation rule ID to obtain the first message that is assembled.

4. The method according to Claim 2, **characterized in that** the step of reassembling the second message comprises: reassembling the second message according to the adaptation rule table.

5. The method according to claim 4, **characterized in that** the step of reassembling the second message according to the adaptation rule table comprises: searching for a second adaptation rule identifier, ID, according to the terminal serial number, and reverse-adaptively assembling the second message according to a field configuration value corresponding to the second adaptation rule ID, which is found in the adaptation rule table, to obtain the second message that is assembled.

6. The method according to Claim 5, **characterized in that** the adaptation device generating, in the terminal information table, a corresponding relationship between the terminal serial number and an adaptation rule identifier, ID, when the first message is a registration message of the terminal; and
the step of determining the second adaptation rule ID according to the terminal serial number comprises: searching for the second adaptation rule ID in the terminal information table according to the terminal serial number.

7. An M2M platform system, comprising: an interface device (62), a service processing device (64) and an adaptation device (60), wherein
the adaptation device (60) comprises:
a first parsing module (601), configured, after receiving a first message from a terminal, to parse the first message to obtain a protocol type of the first message;
a first judging module (602), configured to judge whether the protocol type of the first message matches with an interface protocol of the M2M platform;
a first assembling module (603), configured, when the first judging module (602) judges that the protocol type of the first message does not match with the interface protocol of the M2M platform, to reassemble the first message to make the first message that is assembled match with the interface protocol of the M2M platform;
a first sending module (604), configured to send the first message assembled by the first assembling module (603) to the interface device (62);
a second parsing module (605), configured, after receiving a second message from the interface device (62), to parse out a terminal serial number from a second message;
a second judging module (606), configured, according to the terminal serial number, to judge whether a protocol type of the second message matches with a protocol type of the terminal;
a second assembling module (607), configured, when the second judging module (606) judges that the protocol type of the second message does not match with the protocol type of the terminal, to reassemble the second message to make the second message that is assembled match with the protocol type of the terminal; and
a second sending module (608), configured to send the second message assembled by the second assembling module (607) to the terminal.

8. The system according to Claim 7, **characterized in that** the adaptation device (60) is configured with an adaptation rule table, the first assembling module (603) is configured to reassemble the first message according to the adaptation rule table, the second assembling module (607) is configured to reassemble the second message according to the adaptation rule table.

## Patentansprüche

1. Ein Verfahren zum Verarbeiten einer Maschine-zu-Maschine/Mensch, M2M,-Plattform, das folgende Schritte aufweist:
syntaktisches Analysieren (S202) einer ersten Mitteilung durch eine Adaptionsvorrichtung einer M2M-Plattform, um einen Protokolltyp der ersten Mitteilung zu erhalten nach dem Empfangen der ersten Mitteilung von einem Anschluss;
Beurteilen (S204), durch die Adaptionsvorrichtung, ob der Protokolltyp der ersten Mitteilung mit einem Schnittstellenprotokoll der M2M-Plattform übereinstimmt, und falls der Protokolltyp der ersten Mitteilung nicht mit dem Schnittstellenprotokoll der M2M-Plattform übereinstimmt, Wieder-Zusammensetzen der ersten Mitteilung, um zu bewirken, dass die erste Mitteilung, die wieder zusammengesetzt ist, mit dem Schnittstellenprotokoll der M2M-Plattform übereinstimmt;
Senden (S206) der ersten Mitteilung, die wieder zusammengesetzt ist, an eine Schnittstellenvorrichtung der M2M-Plattform durch die Adaptionsvorrichtung;
syntaktisches Analysieren einer Anschlussseriennummer von einer zweiten Mitteilung durch die Adaptionsvorrichtung nach dem Empfangen einer zweiten Mitteilung von der Schnittstellenvorrichtung;
Beurteilen, durch die Adaptionsvorrichtung, gemäß der Anschlussseriennummer, ob ein Protokolltyp der zweiten Mitteilung mit einem Protokolltyp des Anschlusses übereinstimmt, und falls der Protokolltyp der zweiten Mitteilung nicht mit dem Protokolltyp des Anschlusses übereinstimmt, Wieder-Zusammensetzen der zweiten Mitteilung, um zu bewirken, dass die zweite Mitteilung, die wieder zusammengesetzt ist, mit dem Protokolltyp des Anschlusses übereinstimmt; und
Senden, durch die Adaptionsvorrichtung, der zweiten Mitteilung, die wieder zusammengesetzt ist, an den Anschluss.

2. Das Verfahren gemäß Anspruch 1, **dadurch gekennzeichnet, dass** die Adaptionsvorrichtung mit einer Adaptionsregeltabelle ausgebildet ist; und
der Schritt des Wieder-Zusammensetzens der ersten Mitteilung folgenden Schritt aufweist:
Wieder-Zusammensetzen der ersten Mitteilung gemäß der Adaptionsregeltabelle.

3. Das Verfahren gemäß Anspruch 2, **dadurch gekennzeichnet, dass** der Schritt des Wieder-Zusammensetzens der ersten Mitteilung gemäß der Adaptionsregeltabelle folgenden Schritt aufweist:
Suchen nach einem ersten Adaptionsregelidentifizierer, ID, in der Adaptionsregeltabelle gemäß dem Protokolltyp der ersten Mitteilung, und adaptives Zusammensetzen der ersten Mitteilung gemäß einem Feldkonfigurationswert, der dem ersten Adaptionsregel-ID entspricht, um die erste Mitteilung zu erhalten, die zusammengesetzt ist.

4. Das Verfahren gemäß Anspruch 2, **dadurch gekennzeichnet, dass** der Schritt des Wieder-Zusammensetzens der zweiten Mitteilung folgenden Schritt aufweist:
Wieder-Zusammensetzen der zweiten Mitteilung gemäß der Adaptionsregeltabelle.

5. Das Verfahren gemäß Anspruch 4, **dadurch gekennzeichnet, dass** der Schritt des Wieder-Zusammensetzens der zweiten Mitteilung gemäß der Adaptionsregeltabelle folgenden Schritt aufweist:
Suchen nach einem zweiten Adaptionsregelidentifizierer, ID, gemäß der Anschlussseriennummer, und umgekehrt adaptives Zusammensetzen der zweiten Mitteilung gemäß einem Feldkonfigurationswert, der dem zweiten Adaptionsregel-ID entspricht, der in der Adaptionsregeltabelle gefunden wird, um die zweite Mitteilung zu erhalten, die zusammengesetzt ist.

6. Das Verfahren gemäß Anspruch 5, **dadurch gekennzeichnet, dass** die Adaptionsvorrichtung in der Anschlussinformationstabelle eine entsprechende Beziehung zwischen der Anschlussseriennummer und einem Adaptionsregelidentifizierer-ID erzeugt, wenn die erste Mitteilung eine Registrierungsmitteilung des Anschlusses ist; und
der Schritt des Bestimmens des zweiten Adaptionsregel-ID gemäß der Anschlussseriennummer folgenden Schritt aufweist:
Suchen nach dem zweiten Adaptionsregel-ID in der Anschlussinformationstabelle gemäß der Anschlussseriennummer.

7. Ein M2M-Plattformsystem, das folgende Merkmale aufweist:
eine Schnittstellenvorrichtung (62), eine Dienstverarbeitungsvorrichtung (64) und eine Adaptionsvorrichtung (60), wobei
die Adaptionsvorrichtung (60) folgende Merkmale aufweist:
ein erstes Syntaktisches-Analysieren-Modul (601), das ausgebildet ist, um nach dem Empfangen einer ersten Mitteilung von einem Anschluss die erste Mitteilung syntaktisch zu analysieren, um einen Protokolltyp der ersten Mitteilung zu erhalten;
ein erstes Beurteilungsmodul (602), das ausgebildet ist, um zu beurteilen, ob der Protokolltyp der ersten Mitteilung mit einem Schnittstellenprotokoll der M2M-Plattform übereinstimmt;
ein erstes Zusammensetzmodul (603), das ausgebildet ist, um, wenn das erste Beurteilungsmodul (602) beurteilt, dass der Protokolltyp der ersten Mitteilung nicht mit dem Schnittstellenprotokoll der M2M-Plattform übereinstimmt, die erste Mitteilung wieder zusammenzusetzen, um zu bewirken, dass die erste Mitteilung, die zusammengesetzt ist, mit dem Schnittstellenprotokoll der M2M-Plattform übereinstimmt;
ein erstes Sendemodul (604), das ausgebildet ist, um die erste Mitteilung, die durch das erste Zusammensetzmodul (603) zusammengesetzt wird, an die Schnittstellevorrichtung (62) zu senden;
ein zweites Syntaktisches-Analysieren-Modul (605), das ausgebildet ist, um nach dem Empfangen einer zweiten Mitteilung von der Schnittstellenvorrichtung (62) eine Anschlussseriennummer von einer zweiten Mitteilung syntaktisch zu analysieren;
ein zweites Beurteilungsmodul (606), das ausgebildet ist, um gemäß der Anschlussseriennummer zu beurteilen, ob ein Protokolltyp der zweiten Mitteilung mit einem Protokolltyp des Anschlusses übereinstimmt;
ein zweites Zusammensetzmodul (607), das ausgebildet ist, um, wenn das zweite Beurteilungsmodul (606) beurteilt, dass der Protokolltyp der zweiten Mitteilung nicht mit dem Protokolltyp des Anschlusses übereinstimmt, die zweite Mitteilung wieder zusammenzusetzen, um zu bewirken, dass die zweite Mitteilung, die zusammengesetzt ist, mit dem Protokolltyp des Anschlusses übereinstimmt; und
ein zweites Sendemodul (608), das ausgebildet ist, um die zweite Mitteilung, die durch das zweite Zusammensetzmodul (607) zusammengesetzt wird, an den Anschluss zu senden.

8. Das System gemäß Anspruch 7, **dadurch gekennzeichnet, dass** die Anpassungsvorrichtung (60) mit einer Anpassungsregeltabelle ausgebildet ist, das erste Zusammensetzmodul (603) ausgebildet ist, um die erste Mitteilung gemäß der Adaptionsregeltabelle wieder zusammenzusetzen, das zweite Zusammensetzmodul (607) ausgebildet ist, um die zweite Mitteilung gemäß der Adaptionsregeltabelle wieder zusammenzusetzen.

## Revendications

1. Procédé de traitement d'un message d'une plate-forme machine-à-machine/homme, M2M, comprenant les étapes consistant à:
par un dispositif d'adaptation d'une plate-forme M2M (S202), analyser un premier message pour obtenir un type de protocole du premier message après réception du premier message d'un terminal;
par le dispositif d'adaptation, juger (S204) si le type de protocole du premier message coïncide avec un protocole d'interface de la plate-forme M2M et, si le type de protocole du premier message ne coïncide pas avec le protocole d'interface de la plate-forme M2M, réassembler le premier message pour faire que le premier message réassemblé coïncide avec le protocole d'interface de la plate-forme M2M;
par le dispositif d'adaptation, envoyer (S206) le premier message qui est réassemblé à un dispositif d'interface de la plate-forme M2M;
par le dispositif d'adaptation, analyser un numéro de série de terminal d'un deuxième message après réception d'un deuxième message du dispositif d'interface;
par le dispositif d'adaptation, juger, en fonction du numéro de série de terminal, si un type de protocole du deuxième message coïncide avec un type de protocole du terminal, et, si le type de protocole du deuxième message ne coïncide pas avec le type de protocole du terminal, réassembler le deuxième message pour faire que le deuxième message réassemblé coïncide avec le type de protocole du terminal; et
par le dispositif d'adaptation, envoyer le deuxième message qui est réassemblé au terminal.

2. Procédé selon la revendication 1, **caractérisé par le fait que** le dispositif d'adaptation est configuré à l'aide d'un tableau de règles d'adaptation; et
l'étape de réassemblage du premier message comprend le fait de: réassembler le premier message en fonction du tableau de règles d'adaptation.

3. Procédé selon la revendication 2, **caractérisé par le fait que** l'étape de réassemblage du premier message selon le tableau de règles d'adaptation comprend le fait de: chercher un identificateur de première règle d'adaptation, ID, dans le tableau de règles d'adaptation en fonction du type de protocole du premier message et assembler de manière adaptative le premier message en fonction d'une valeur de configuration de champ correspondant à la première règle d'adaptation, ID, pour obtenir le premier message qui est assemblé.

4. Procédé selon la revendication 2, **caractérisé par le fait que** l'étape de réassemblage du deuxième message comprend le fait de: réassembler le deuxième message selon le tableau de règles d'adaptation.

5. Procédé selon la revendication 4, **caractérisé par le fait que** l'étape de réassemblage du deuxième message selon le tableau de règles d'adaptation comprend le fait de: chercher un identifiant de deuxième règle d'adaptation, ID, en fonction du numéro de série de terminal, et assembler de manière inversement adaptative le deuxième message en fonction d'une valeur de configuration de champ correspondant à la deuxième règle d'adaptation, ID, qui est trouvée dans le tableau de règles d'adaptation, pour obtenir le deuxième message qui est assemblé.

6. Procédé selon la revendication 5, **caractérisé par le fait que** le dispositif d'adaptation génère, dans le tableau d'informations de terminal, un rapport correspondant entre le numéro de série de terminal et un identificateur de règle d'adaptation, ID, lorsque le premier message est un message d'enregistrement du terminal; et
l'étape de détermination de la deuxième règle d'adaptation, ID, en fonction du numéro de série de terminal comprend le fait de: chercher la deuxième règle d'adaptation, ID, dans le tableau d'informations de terminal en fonction du numéro de série de terminal.

7. Système de plate-forme M2M, comprenant: un dispositif d'interface (62), un dispositif de traitement de service (64) et un dispositif d'adaptation (60), dans lequel
le dispositif d'adaptation (60) comprend:
un premier module d'analyse (601) configuré pour analyser, après réception d'un premier message d'un terminal, le premier message pour obtenir un type de protocole du premier message;
un premier module de jugement (602) configuré pour juger si le type de protocole du premier message coïncide avec un protocole d'interface de la plate-forme M2M;
un premier module d'assemblage (603) configuré pour réassembler, lorsque le premier module de jugement (602) juge que le type de protocole du premier message ne coïncide pas avec le protocole d'interface de la plate-forme M2M, le premier message pour faire que le premier message qui est assemblé coïncide avec le protocole d'interface de la plate-forme M2M;
un premier module d'envoi (604) configuré pour envoyer le premier message assemblé par le premier module d'assemblage (603) au dispositif d'interface (62);
un deuxième module d'analyse (605) configuré pour analyser, après réception d'un deuxième message du dispositif d'interface (62), un numéro de série de terminal à partir d'un deuxième message;
un deuxième module de jugement (606) configuré pour juger, en fonction du numéro de série de terminal, si un type de protocole du deuxième message coïncide avec un type de protocole de terminal;
un deuxième module d'assemblage (607) configuré pour réassembler, lorsque le deuxième module de jugement (606) juge que le type de protocole du deuxième message ne coïncide pas avec le type de protocole du terminal, le deuxième message pour faire que le deuxième message qui est assemblé coïncide avec le type de protocole du terminal; et
un deuxième module d'envoi (608) configuré pour envoyer le deuxième message assemblé par le deuxième module d'assemblage (607) au terminal.

8. Système selon la revendication 7, **caractérisé par le fait que** le dispositif d'adaptation (60) est configuré à l'aide d'un tableau de règles d'adaptation, le premier module d'assemblage (603) est configuré pour réassembler le premier message selon le tableau de règles d'adaptation, le deuxième module d'assemblage (607) est configuré pour réassembler le deuxième message selon le tableau de règles d'adaptation.
